# EUROPEAN PATENT APPLICATION

(11) **EP 2 392 455 A1**
(43) Date of publication of application: **07.12.2011**
(21) Application number: 11388002.5
(22) Date of filing: 03.06.2011
(51) Int. Cl.: B32B 15/08, B32B 27/32, B65D 65/40

(54) **Multilayered wrapping film and use thereof**

(30) Priority: 04.06.2010 DK 201000110
(71) Applicant: Danapak Flexibles A/S, 4200 Slagelse (DK)
(72) Inventor: Johansen, Peter, 5000 Odense C (DK); Dydensborg, Else, 5260 Odense S (DK); Christensen, Lars, 4200 Slagelse (DK)
(74) Representative: Larsen, Hans Ole

(57) **Abstract**

Packaging sheets according to the invention comprise a plurality of layers which, adhered together, constitute a laminate. The layers comprise a fat-resistant paper layer (1) of about 35 g per m², an adhesive layer (2) and then an OPP layer (3) of about 15 µm, which is metallized on the side with an Al coating (4).

The advantage is very low manufacturing costs, just as the environmental impact is considerably lower in the manufacture, since only a single thin metal layer is incorporated, and since there is no need for scoring of folding lines, the packaging itself is simplified.

## Description

### The prior art

The invention relates to a packaging sheet in the form of a laminate, in particular for the packaging of fat-containing products, said laminate comprising a layer of fat-resistant paper, as well as use of this laminate.

Sheets of this type are used In particular for the packaging of foods having a high fat content, such as butter, fat, margarine, cheese, chocolate, meat extract in solid form as well as powder form.

A laminate containing an aluminium sheet, which provides a good protection against light as well as air, is normally used for the packaging of such goods.

The drawback is the relatively high price which the metal sheet has, and also the great environmental impact which rolling of metal, such as aluminium, involves.

To reduce the amount of metal in such a packaging laminate, it is known from EP 0 209 362 A2 to use a laminate comprising a paper layer on which an OPP layer, metallized on both sides, is adhered. This laminate, however, cannot be used in conventional packaging machines, without having been scored in the folding lines beforehand. Thus, a great deal of metal is still used, and a further working process is moreover needed in the form of scoring. Further, this known laminate has the drawback that it cannot be used for the packaging of salt-containing products because of the decomposition of the metal layer by the salt.

### The object of the invention

It is the object of the invention to provide a packaging sheet, which satisfies the requirements of protection of fat-containing products, but which does not have the above-mentioned drawbacks, and which, at the same time, is close to the organic material, paper, which the consumer prefers as a package for use for foods.

This is achieved according to the invention by a package configured as a laminate, which comprises a layer of fat-resistant paper on which an adhesive layer secures a layer of OPP, which is coated with a thin metal layer on the one side.

In this surprising simple manner, it is possible to make a laminate, where the main component is formed by paper, on which a thin layer of OPP with a thin metal layer on the one side is adhered. This provides a material which is perceived as paper, and which moreover satisfies the requirements of fat resistance and barrier properties.

Further, the laminate has the great advantage that it may readily be folded in generally known packaging machines, entirely without any need for scoring lines in the folding edges. This saves a further scoring process, and, thereby, the packaging costs are low.

When, as stated in claim 2, the metallized layer is adhered on the outer side of the OPP layer, an attractive sheet is achieved, which is suitable for the packaging of fat-containing products.

When, as stated in claim 3, the metallized layer is adhered on the inner side of the OPP layer, this sheet will be suitable for the packaging of fat-con-talning and/or salt-containing products, since the metallized layer is covered.

When, according to claim 4, the metallized layer is applied by a generally known coating process, it is possible to apply very thin layers, which may be below 1/100 µm, as stated in claim 5.

Finally, according to claims 6 and 7, it is expedient that the packaging process may be simplified, since the laminate does not need a scoring/folding edge because of its small thickness, and, therefore, the laminate may readily used in known packaging machines.

### The drawing

Examples of packaging sheets according to the invention will be described more fully below with reference to the drawing, in which
- fig. 1: shows a sectional view of a known laminate,
- fig. 2: shows a sectional view of a laminate according to the invention with a metal coating on the outer side, and
- fig. 3: shows a sectional view of a laminate according to the invention with embedded metal coating.

### Description of an exemplary embodiment

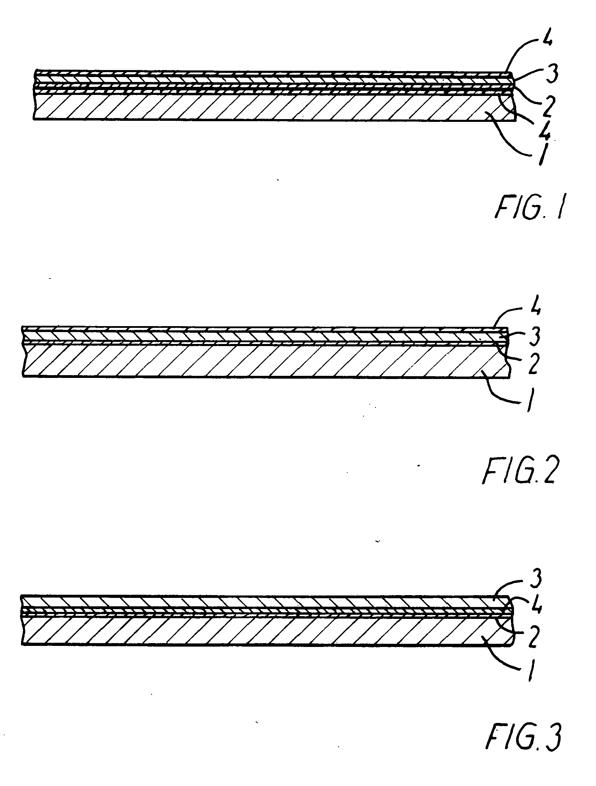

The most immediate prior art packaging sheet, as known e,g, from EP 0 209 362 A2, is shown in a sectional view in fig. 1, where the reference numerals refer to the materials mentioned below. It is noted that this sheet is provided with a metal layer 4 on both sides of the OPP layer 3. This means that this laminate cannot readily be used in known packaging machines because of its thickness and thereby rigidity, and, therefore, it must be scored in the folding/bending lines before the further packaging can take place.

The packaging sheet according to the invention just comprises the necessary and sufficient layers, which, in their final shape in the form of a laminate, constitute the sheet material.

As shown in figs. 2 and 3, the packaging sheet according to the invention comprises a base layer 1 of fat-resistant paper with a weight of between 20 and 45 g per m² and preferably of 35 g per m².

An adhesive layer 2 of a generally known adhesive is applied to this paper layer 1 in a generally known manner.

This adhesive layer 2 serves to secure an OPP layer 3 with a thickness of between 12 and 35 µ and preferably of about 15 µ. Preferably, the OPP 3 layer is provided with a thin metal layer 4 on the one side, in particular in the form of an Al layer 4. As shown in the example in fig. 2, this metal layer 4 is disposed on the outer side of the OPP layer 4, while, as shown in the example in fig. 3, it may be disposed on the lower side of the OPP layer 3, i.e. separated from the product. Hereby, the example of the laminate shown in fig. 3 may be used for the packaging of salt-containing products, such as salted butter.

Owing to the few layers and their dimensions, the packaging laminate may be manufactured at very low costs. It has been found in practice that the laminate according to the invention may be manufactured at 30% lower costs than the generally known sheets which are used for the packaging of fat-containing foods.

Moreover, the sheet has the advantage that it may be used in connection with known packaging machines, as the laminate may be folded without any need for scoring lines, which makes it suitable for the packaging of e.g. butter, margarine and the like in conventional packaging systems, The sheet fully satisfies the requirements of the packaged products with respect to shelf life and barrier properties, including the ability to withstand the effect of salt on the metallized layer in the embodiment shown in fig. 3.

## Claims

1. A packaging sheet in the form of a laminate, in particular for the packaging of fat-containing products, said laminate comprising a layer of fat-resistant paper (1), **characterized in that** an adhesive layer (2), which secures a layer of OPP (3), is applied to the one side of the layer (1), said OPP layer (3) being coated with a metallized layer (4) on the one side.

2. A packaging sheet according to claim 1, **characterized in that** the metallized layer (4) is adhered to the outer side of the OPP layer (3).

3. A packaging sheet according to claim 1, **characterized in that** the metallized layer (4) is adhered to the inner side of the OPP layer (3).

4. A packaging sheet according to claims 1 - 3, **characterized in that** the metallized layer (4) is an Al coating.

5. A packaging sheet according to claims 1 -4, **characterized in that** the metallized layer (4) has a thickness of below 1/100 µm.

6. Use of the laminate defined in claims 1 - 5, **characterized in that** it is used in generally known packaging machines without preceding scoring of bending lines.

7. Use according to claims 3 - 5, **characterized in that** it is used for the packaging of salt-containing products.
